(19) **Europäisches Patentamt**
**European Patent Office**
**Office européen des brevets**

(11) **EP 4 195 601 A1**

(12) **EUROPEAN PATENT APPLICATION**
published in accordance with Art. 153(4) EPC

(43) Date of publication:
**14.06.2023 Bulletin 2023/24**

(21) Application number: **21863701.5**

(22) Date of filing: **03.09.2021**

(51) International Patent Classification (IPC):
***H04L 25/03*** (2006.01)      ***H04L 27/26*** (2006.01)

(52) Cooperative Patent Classification (CPC):
**H04L 25/03; H04L 27/26; H04W 28/06; H04W 72/04**

(86) International application number:
**PCT/CN2021/116461**

(87) International publication number:
**WO 2022/048639 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.09.2020 CN 202010923636**

(71) Applicant: **Vivo Mobile Communication Co., Ltd.**
**Dongguan, Guangdong 523863 (CN)**

(72) Inventors:
• **YUAN, Pu**
  **Dongguan, Guangdong 523863 (CN)**
• **LIU, Hao**
  **Dongguan, Guangdong 523863 (CN)**
• **PAN, Xueming**
  **Dongguan, Guangdong 523863 (CN)**

(74) Representative: **Murgitroyd & Company**
**Murgitroyd House**
**165-169 Scotland Street**
**Glasgow G5 8PL (GB)**

(54) **DATA SENDING METHOD, DATA RECEIVING AND PROCESSING METHOD, AND RELATED DEVICE**

(57)     This application discloses a data sending method, a data receiving and processing method, and a related device. The method includes: transforming a delay Doppler domain data set on a delay Doppler resource block into a time-frequency domain data set; mapping the time-frequency domain data set to a time-frequency resource block based on a preset resource mapping rule; and sending the time-frequency domain data set on the time-frequency resource block. The resource mapping rule includes sparse mapping.

FIG. 5

**Description**

**CROSS-REFERENCE TO RELATED APPLICATION**

This application claims priority to Chinese Patent Application No. 202010923636.9 filed in China on September 4, 2020, which is incorporated herein by reference in its entirety.

**TECHNICAL FIELD**

This application relates to the field of communications technologies, and in particular, to a data sending method, a data receiving and processing method, and a related device.

**BACKGROUND**

In a complex electromagnetic wave transmission environment, because there is a large amount of scattering, reflection, and refraction surfaces, radio signals arrive at a receiving antenna at different moments through different paths, that is, a multipath effect of transmission. Inter symbol interference (Inter Symbol Interference, ISI) occurs when a previous symbol and a next symbol of a sent signal arrive at the same time through different paths, or when the next symbol arrives within a delay extension of the previous symbol. Similarly, in a frequency domain, due to the Doppler effect caused by relative speeds of a receiving and sending end, each subcarrier where the signal is located has an offset in frequency to different extent, so that subcarriers that may have been orthogonal overlap, thereby causing inter carrier interference (Inter Carrier Interference, ICI). In communications technologies, an available orthogonal frequency division multiplex (Orthogonal frequency division multiplex, OFDM) multi-carrier system improves anti-ISI performance by adding a cyclic prefix (cyclic prefix, CP). However, a size of subcarrier spacing of the OFDM multi-carrier system is limited. Therefore, in a high-speed mobile scenario (such as high-speed train), a larger Doppler frequency shift is caused due to a larger relative speed between receiving and sending ends. This destroys orthogonality between OFDM subcarriers, thereby resulting in serious ICI between subcarriers.

Orthogonal time frequency space (Orthogonal Time Frequency Space, OTFS) technology may also be used in communications technologies. The OTFS technology defines transform between a delay Doppler domain and a time-frequency domain, and captures delay and Doppler characteristic of a channel by simultaneously mapping service data and pilot to the delay Doppler domain at the receiving and sending end and by using the pilot in the delay Doppler domain. In addition, the OTFS technology avoids pilot pollution caused by ICI in the OFDM system by setting protection spacing, thereby making channel estimation more accurate and helping a receiver improve the success rate of data decoding.

In the OTFS technology, the mapping of the delay Doppler time-frequency domain is mapping from $M * N$ to $M * N$ in one-to-one correspondence. $M$ is a side length of a frame structure in a delay dimension or a frequency dimension. $N$ is a side length of a frame structure in a Doppler dimension or a time dimension, and control of channel estimation performance is implemented by adjusting $M * N$. However, excessive large $M * N$ results in resource waste and low resource utilization.

**SUMMARY**

Embodiments of this application provide a data sending method, a data receiving and processing method, and a related device, which can resolve a problem of low resource utilization.

According to a first aspect, a data sending method is provided, performed by a sending device, and includes:

transforming a delay Doppler domain data set on a delay Doppler resource block into a time-frequency domain data set;
mapping the time-frequency domain data set to a time-frequency resource block based on a preset resource mapping rule; and
sending the time-frequency domain data set on the time-frequency resource block.

The resource mapping rule includes sparse mapping.

According to a second aspect, a data receiving and processing method is provided, performed by a receiving device, and includes:

demodulating received data to obtain a time domain data set corresponding to a current processing time unit;
transforming the time domain data set into a time-frequency domain data set;

obtaining a third time-frequency domain data set corresponding to the receiving device from the time-frequency domain data set based on a preset resource mapping rule; and

transforming the third time-frequency domain data set into a delay Doppler domain data set.

The resource mapping rule includes sparse mapping.

According to a third aspect, a data sending apparatus is provided, and includes:

a first transforming module, configured to transform a delay Doppler domain data set on a delay Doppler resource block into a time-frequency domain data set;

a mapping module, configured to map the time-frequency domain data set to a time-frequency resource block based on a preset resource mapping rule; and

a sending module, configured to send the time-frequency domain data set on the time-frequency resource block.

The resource mapping rule includes sparse mapping.

According to a fourth aspect, a data receiving and processing apparatus is provided, and includes:

a demodulation module, configured to demodulate received data to obtain a time domain data set corresponding to a current processing time unit;

a second transforming module, configured to transform the time domain data set into a time-frequency domain data set;

an obtaining module, configured to obtain a third time-frequency domain data set corresponding to the receiving device from the time-frequency domain data set based on a preset resource mapping rule; and

a third transforming module, configured to transform the third time-frequency domain data set into a delay Doppler domain data set.

The resource mapping rule includes sparse mapping.

According to a fifth aspect, a first communications device is provided. The first communications device includes a processor, a memory, and a program or an instruction stored in the memory and executable on the processor, where when the program or the instruction is executed by the processor, the steps of the method according to the first aspect are implemented, or the steps of the method according to the second aspect are implemented.

According to a sixth aspect, a readable storage medium is provided, where the readable storage medium stores a program or an instruction, and when the program or the instruction is executed by a processor, the steps of the method according to the first aspect or the steps of the method according to the second aspect are implemented.

According to a seventh aspect, an embodiment of this application provides a chip, where the chip includes a processor and a communications interface, the communications interface is coupled to the processor, and the processor is configured to run a program or an instruction of a network device, to implement the method according to the second aspect.

Embodiments of this application transform a delay Doppler domain data set on a delay Doppler resource block into a time-frequency domain data set; map the time-frequency domain data set to a time-frequency resource block based on a preset resource mapping rule; and send the time-frequency domain data set on the time-frequency resource block. The resource mapping rule includes sparse mapping. In this way, it can be avoided that $M$ and $N$ are increased causing a large amount of occupied resources. Therefore, the embodiments of this application improve utilization of resources.

## BRIEF DESCRIPTION OF DRAWINGS

FIG. 1 is a structural diagram of a network system to which an embodiment of this application may be applied;

FIG. 2 is a schematic diagram of conversion between a delay Doppler plane and a time-frequency plane;

FIG. 3 is a schematic diagram of channel response relationships in different planes;

FIG. 4 is a schematic diagram of pilot mapping of a delay Doppler domain;

FIG. 5 is a flowchart of a data sending method according to an embodiment of this application;

FIG. 6 is a first schematic diagram of sparse mapping in a data sending method according to an embodiment of this application;

FIG. 7 is a first schematic diagram of interleaving mapping in a data sending method according to an embodiment of this application;

FIG. 8 is a second schematic diagram of interleaving mapping in a data sending method according to an embodiment of this application;

FIG. 9 is a schematic diagram of a resource occupied by sparse mapping in a data sending method according to an embodiment of this application;

FIG. 10 is a second schematic diagram of sparse mapping in a data sending method according to an embodiment of this application;

FIG. 11 is a flowchart of a data receiving and processing method according to an embodiment of this application;

FIG. 12 is a structural diagram of a data sending apparatus according to an embodiment of this application;

FIG. 13 is a structural diagram of a data receiving and processing apparatus according to an embodiment of this application;

FIG. 14 is a structural diagram of a communications device according to an embodiment of this application;

FIG. 15 is a structural diagram of a network side device according to an embodiment of this application; and

FIG. 16 is a structural diagram of a terminal device according to an embodiment of this application.

## DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of the present application shall fall within the protection scope of the present application.

The terms "first", "second", and the like in this specification and claims of this application are used to distinguish between similar objects instead of describing a specific order or sequence. It should be understood that, data used in this way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that the technologies described in the embodiments of this application are not limited to long term evolution (Long Term Evolution, LTE)/LTE-Advanced (LTE-Advanced, LTE-A) systems, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application may be used interchangeably. The described technologies can be applied to both the systems and the radio technologies mentioned above as well as to other systems and radio technologies. A New Radio (New Radio, NR) system is described below as an example, and the term NR is used in most of the descriptions, although these technologies can also be used in an application other than an application of the NR system, for example, a 6th-generation (6th Generation, 6G) communications system.

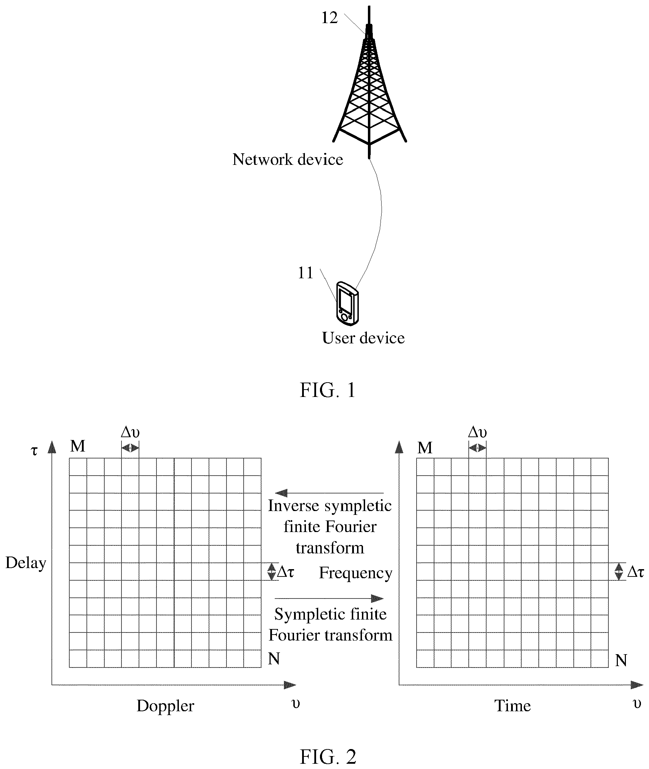

FIG. 1 is a block diagram of a wireless communications system to which an embodiment of this application can be applied. The wireless communications system includes a user device 11 and a network device 12. The user device 11 may also be referred to as a terminal device or user equipment (User Equipment, UE). The user device 11 may be a terminal device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable device), vehicle user equipment (VUE), and pedestrian user equipment (PUE). The wearable device includes a bracelet, a headset, and glasses. It should be noted that a specific type of the user device 11 is not limited in this embodiment of this application. The network device 12 may be a base station or a core network device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a Wi-Fi node, a transmitting receiving point (Transmitting Receiving Point, TRP), or some other appropriate term in the art. As long as the same technical effect is achieved, the base station is not limited to a specific technical term. It should be noted that the base station in the NR system is taken only as an example in the embodiments of this application, but a specific type of the base station is not limited.

For ease of description, the following describes some content in this embodiment of this application.

Delay and Doppler characteristic of a channel are essentially determined by a multipath channel. Signals that arrive at a receiver through different paths arrive at different times due to different propagation paths. For example, if

two returns $s_1$ and $s_2$ arrive at the receiver through separate distances thereof $d_1$ and $d_2$, time difference between their arrival at the receiver is $\Delta t = \frac{|d_1 - d_2|}{c}$, and $c$ is the speed of light. Due to the time difference between returns $s_1$ and $s_2$, coherent superposition thereof on the receiver side causes an observed signal amplitude jitter, that is, fading effect. Similarly, Doppler diffusion in a multipath channel is also caused by a multipath effect. It is known that the Doppler effect is caused because there are relative speeds at a receiving end and a sending end. An incident angle of signals arriving at a receiver through different paths relative to the normal line of an antenna is different. Therefore, the relative speeds are different, resulting in difference of Doppler frequency shift of signals in different paths. Assumed that original frequency of the signal is $f_0$, the relative speed of the receiving and sending end is $\Delta V$, and an incident angle between the signal and the receiving antenna is $\theta$, $\Delta v = \frac{\Delta V}{f} \cos \theta$. Apparently, when two returns $s_1$ and $s_2$ arrive at the receiving antenna through different paths and have different incident angles $\theta_1$ and $\theta_2$, their obtained Doppler frequency shifts $\Delta v_1$ and $\Delta v_2$ are also different. In conclusion, the signal seen by a receiver end is superposition of component signals with different delay and Doppler from different paths, which is generally reflected as a received signal with fading and frequency shift relative to the original signal. A delay Doppler analysis on the channel helps collect delay Doppler information of each path, thereby reflecting delay Doppler response of the channel.

The full name of the OTFS modulation technology is orthogonal time frequency space (Orthogonal Time Frequency Space, OTFS) modulation. This technology logically maps information in a data packet of a size of $M \times N$, such as a quadrature amplitude modulation (Quadrature Amplitude Modulation, QAM) symbol, to a $M \times N$ grid point on a two-dimensional delay Doppler plane, that is, a pulse in each grid point modulates a QAM symbol in the data packet. In addition, by designing a set of orthogonal two-dimensional basis functions, a data set of $M \times N$ on the delay Doppler domain plane is transformed into a time-frequency domain plane of $N \times M$. Such transform is mathematically called Inverse Symplectic Finite Fourier Transform (Inverse Sympletic Finite Fourier Transform, ISFFT). Correspondingly, the transform from the time-frequency domain to the delay Doppler domain is called Sympletic Finite Fourier Transform (Sympletic Finite Fourier Transform, SFFT). In a physical sense, delay and Doppler effect of a signal are actually linear superposition effects of a series of returns with different time and frequency offsets after the signal passes through a plurality of channels. In this sense, delay Doppler analysis and time-frequency domain analysis can be obtained by mutual conversion between ISFFT and SFFT.

The foregoing grid point can be understood as a resource element (Resource element, RE). The foregoing transform relationship is shown in FIG. 2.

Therefore, the OTFS technology transforms a time-variant multipath channel into a time-invariant two-dimensional delay Doppler domain channel (within a certain duration), which directly reflects channel delay Doppler response characteristic caused by geometric characteristic of relative positions of reflectors between transceivers in a radio link. An advantage is that the OTFS eliminates a difficulty of tracking time-variant fading characteristic through traditional time-frequency domain analysis, and instead extracts all kinds of diversity characteristic of a time-frequency channel through delay Doppler domain analysis. In an actual system, a quantity of delay paths and Doppler frequency shifts of the channel is far smaller than a quantity of time domain and frequency domain responses of the channel. Therefore, the channel represented by the delay Doppler domain is relatively simple. Therefore, using the OTFS technology to analyze the delay Doppler domain can encapsulate reference signals more compact and flexible, which is particularly conducive to supporting large antenna arrays in a large-scale multi-user multiple-input multiple-output (Multi-User Multiple-Input Multiple-Output, MIMO) system.

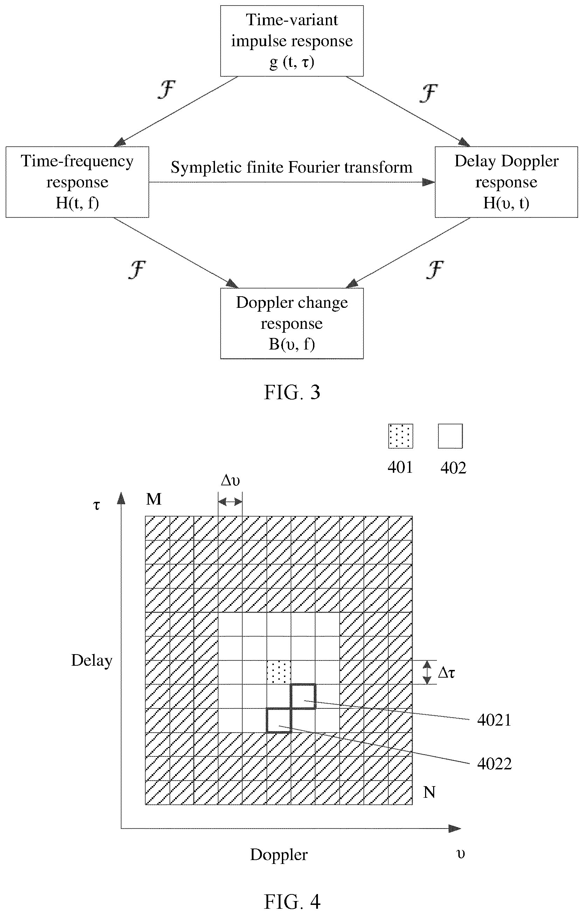

A QAM symbol defined on the delay Doppler plane by the OTFS modulation is transformed for transmission in the time-frequency domain, and returns to the delay Doppler domain through the receiving end for processing. Therefore, a radio channel response analysis method in the delay Doppler domain can be introduced. When a signal passes through a linear time-variant radio channel, a relationship between expressions of channel response of the signal in different planes is shown in FIG. 3:

In FIG. 3, SFFT transform formula is:

$$h(\tau, v) = \int \int H(t, f) e^{-j2\pi \ (vt - f\tau)} \ d\tau dv \ (1)$$

Correspondingly, ISFFT transform formula is:

$$H(t,f) = \int \int h(\tau,v)e^{j2\pi\ (vt-f\tau)}\ d\tau dv\ (2)$$

When a signal passes through a linear time-variant channel, a time domain received signal is $r(t)$, a corresponding frequency domain received signal is R(f), and $r(t)$ = $\mathcal{F}^{-1}\{R(f)\}$. r(t)may be in the following form:

$$r(t) = s(t) * h(t) = \int g(t,\tau)s(t-\tau)d\tau\ (3)$$

According to the relationship in FIG. 3,

$$g(t,\tau) = \int h(v,\tau)e^{j2\pi vt}dv\ (4)$$

Substitute (4) into (3):

$$r(t) = \int \int h(v,\tau)s(t-\tau)e^{j2\pi vt}d\tau dv\ (5)$$

According to the relationship shown in FIG. 3, classical Fourier transform theory and formula (5),

$$
\begin{aligned}
r(t) &= \int \int h(v,\tau)\left(\int S(f)\,e^{j2\pi f(t-\tau)}df\right)e^{j2\pi vt}d\tau dv\\
&= \int \left(\int \int h(v,\tau)e^{j2\pi(vt-f\tau)}d\tau dv\right)S\ (f)\ e^{j2\pi ft}df\\
&= \int H(t,f)S(f)e^{j2\pi ft}df\\
&= \mathcal{F}^{-1}\{R(f)\}\qquad (6)
\end{aligned}
$$

v represents a delay variable, $\tau$ represents a Doppler variable, f represents a frequency variable, and t represents a time variable.

Formula (6) implies that an analysis of delay Doppler domain in an OTFS system can be implemented by adding additional signal processing procedure at a receiving and sending end based on an existing communications framework established in the time-frequency domain. In addition, the additional signal processing is only composed of Fourier transform, which can be completely implemented by an existing hardware without adding new modules. This good compatibility with the existing hardware system greatly facilitates application of OTFS systems. In an actual system, the OTFS technology can be easily implemented as a front processing module and a post processing module of a filtering OFDM system, so that the OTFS technology has good compatibility with a multi-carrier system under the existing NR technology architecture.

When OTFS is combined with a multi-carrier system, the implementation method of the sending end is as follows: a QAM symbol containing to-be-sent information is carried by a waveform of the delay Doppler plane, and converted into a waveform of the time-frequency domain plane in a traditional multi-carrier system through a two-dimensional ISFFT, and then converted into a time-domain sampling point for transmission through symbol-level one-dimensional inverse fast Fourier transform (Inverse Fast Fourier Transform, IFFT) and serial-to-parallel conversion.

The receiving end of the OTFS system is generally an inverse process of the sending end: the time-domain sampling point, after being received by the receiver, is first converted into a waveform on the time-domain plane through parallel-to-serial conversion and symbol-level one-dimensional Fast Fourier Transform (Fast Fourier Transform, FFT), and then converted into a waveform on the delay Doppler domain plane through SFFT. Then the QAM symbol carried by the delay Doppler domain waveform is processed by the receiver, including channel estimation and equalization, demodulation and decoding.

The advantage of the OTFS modulation is mainly shown in the following aspect:

OTFS modulation transforms a time-variant fading channel between transceivers in the time-frequency domain into a deterministic non fading channel in the delay Doppler domain. In the delay Doppler domain, each symbol in a group of information symbols sent at one time experiences the same static channel response and signal noise ratio (Signal Noise Ratio, SNR).

The OTFS system parses a reflector in the physical channel through a delay Doppler image, and uses a receiving balancer to coherently combine energy from different reflection paths, which actually provides a static non fading channel response. Using the above static channel characteristics, the OTFS system does not need to introduce closed loop channel adaptation like the OFDM system to cope with rapidly changing channels, thereby improving system robustness and reducing the complexity of system design.

Because a quantity of delay Doppler states in the delay Doppler domain is far smaller than a quantity of time-frequency states in the time-frequency domain, the channels in the OTFS system can be expressed in a very compact form. The OTFS system has less channel estimation overhead and is more accurate.

Another advantage of the OTFS is that the OTFS deals with a channel with ultra-high Doppler. By analyzing the delay Doppler image with appropriate signal processing parameters, the Doppler characteristics of the channel is fully presented, thereby facilitating signal analysis and processing in Doppler sensitive scenes (such as high-speed movement and millimeter wave).

In conclusion, the channel estimation in the OTFS system adopts the following method: a transmitter maps a pilot pulse to the delay Doppler domain, and a receiver estimates a channel response $h(v, \tau)$ in the delay Doppler domain by using the delay Doppler image analysis of the pilot, so that the channel response expression in the time-frequency domain can be obtained based on the relationship in FIG. 3, which facilitates signal analysis and processing by using the existing time-frequency domain technology. The pilot mapping on the delay Doppler plane may be as shown in FIG. 4.

In FIG. 4, the sending signal consists of a single point pilot (401) located at $(l_p, k_p)$, a protection symbol (402) with an area of $(2l_v + 1)(4k_v + 1) - 1$ surrounding the single point pilot, and a data portion of $MN - (2l_v + 1)(4k_v + 1)$. At the receiving end, two offset peaks (such as 4021 and 4022) appear in a protection band of the grid points in the delay Doppler domain, which means that there are two secondary paths with different delay Doppler in addition to a main path of the channel. By measuring an amplitude, delay and a Doppler parameter of all secondary paths, the delay Doppler domain expression of the channel is obtained, that is, $h(v, \tau)$. To prevent a pilot symbol from being polluted by data on the received signal grid point, thereby resulting in inaccurate channel estimation, an area of the protection symbol should meet the following condition:

$$l_\tau \geq \tau_{max} M \Delta f, k_v \geq v_{max} N \Delta T \qquad (7)$$

$\tau_{max}$ and $v_{max}$ are separately the maximum delay and maximum Doppler frequency shift of all paths of the channel. A plurality of protection symbols 402 surround the single point pilot 401 to form a protection band. The plurality of protection symbols 402 correspond to blank resource elements.

The plane $M * N$ in FIG. 2 and FIG. 4 is actually discrete point value on a two-dimensional delay Doppler plane, and each grid corresponds to a quantized delay Doppler pair $(\tau_i, v_j)$. When the total quantity of resources is fixed (bandwidth and time are fixed), the larger the $M * N$, the more grids. This is equivalent to improving quantization accuracy of discrete delay Doppler point. When $M$ is larger, there is a larger amount of delay that can be distinguished by delay Doppler analysis, which can be considered that delay resolution is improved. When $N$ is larger, there are more Doppler offset values that can be distinguished through delay Doppler analysis, which can be considered that Doppler resolution is improved. With the improvement of multipath and Doppler resolution, more information about channel response can be obtained, so that the channel can be estimated more accurately, and then decoding performance of the receiver is improved.

However, there is an upper limit to the gain obtained by increasing the value of $M * N$. The delay Doppler characteristic of the channel is actually caused by the signal experiencing multipath channels. A quantity of multipath channels depends on a quantity of reflectors in the channel. Therefore, the quantity of multipath channels cannot be infinite. The delay of the channel and a quantity of Doppler response states of the channel are also limited by the quantity of the multipaths and cannot be infinite. Therefore, a certain amount of $M * N$ can meet system design requirement. On the other hand, a size of $M * N$ also depends on a size of a data block. For small packet data, in theory, only small resources of $M * N$ are needed for carrying. However, smaller $M * N$ implies that the channel resolution is smaller and there is a risk of channel estimation performance degradation. However, if $M * N$ is increased excessively to have higher channel resolution, for small package data, excessive design will cause resource waste.

The following describes in detail the data sending method provided in the embodiments of this application through specific embodiments and application scenarios thereof with reference to the accompanying drawings.

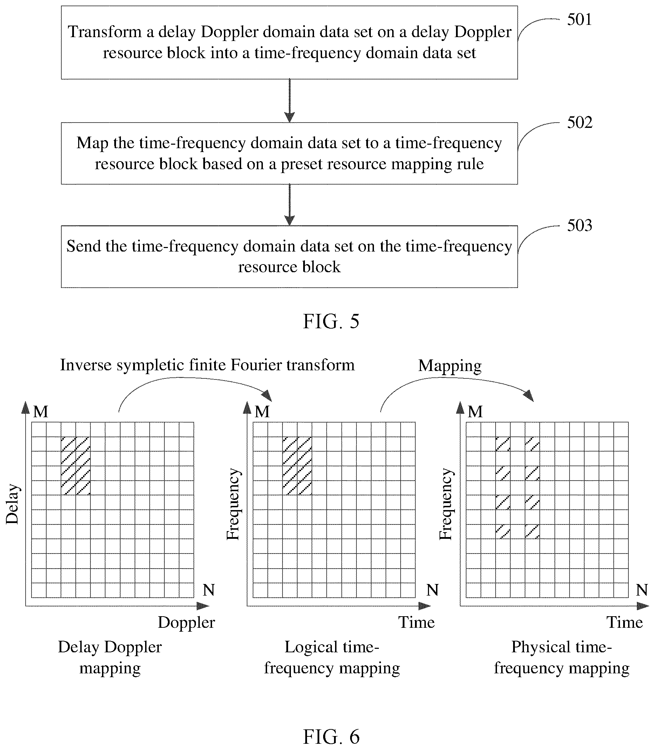

Referring to FIG. 5, FIG. 5 is a flowchart of a data sending method according to an embodiment of this application. The method is performed by a sending device, and as shown in FIG. 5, includes the following steps.

Step 501: Transform a delay Doppler domain data set on a delay Doppler resource block into a time-frequency domain data set.

Step 502: Map the time-frequency domain data set to a time-frequency resource block based on a preset resource mapping rule.

Step 503: Send the time-frequency domain data set on the time-frequency resource block.

The resource mapping rule includes sparse mapping.

In this embodiment of this application, the sparse mapping can be understood as mapping based on a preset sparse spacing. Optionally, sparse mapping can be performed only in the frequency domain, or both in the frequency domain and time domain. In other words, the sparse mapping includes any of the following:

performing continuous mapping in a time domain, and performing the sparse mapping in a frequency domain; and performing sparse mapping in both the time domain and the frequency domain.

When the sparse mapping is performed in both the time domain and the frequency domain, the sparse spacing in the frequency domain and the sparse spacing in the time domain may be the same or different, which is not further limited herein.

In FIG. 2, there is the following conversion relationship between delay Doppler and various parameters in the time-frequency domain. System bandwidth $B = M\Delta f$, and signal duration $T = N\Delta T$. In an OFDM system, the subcarrier spacing $\Delta f$ of the system is inversely proportional to symbol time $\Delta T$, that is $\Delta f = \dfrac{1}{\Delta T}$. It can be seen that two basic measurements of the time-frequency domain plane have the following reciprocal relationship, that is, $\Delta f \cdot \Delta T = 1$. There is a delay Doppler plane inverted with the foregoing time-frequency domain plane, which is determined by delay expansion $\tau_r$ and Doppler spread $v_r$. $\Delta f = \dfrac{1}{\tau_r}$, and $\Delta T = \dfrac{1}{v_r}$, obviously $v_r \cdot \tau_r = 1$. Delay expansion $\tau_r$ and Doppler spread $v_r$ determine a delay Doppler resource grid of $M * N$ on a two-dimensional plane. It can be noted that the delay resolution and Doppler resolution meet the following equations: $\Delta v = \dfrac{v_r}{N}$ and $\Delta \tau = \dfrac{\tau_r}{M}$. According to the foregoing relationship:

$$\Delta v = \frac{1}{N\Delta T}, \Delta \tau = \frac{1}{M\Delta f} \quad (8)$$

It can be seen from Formula (8) that the delay resolution and Doppler resolution can be improved by increasing $\Delta T$ and/or $\Delta f$ keeping $M$ and $N$ unchanged. Therefore, this embodiment of this application uses sparse mapping on mapping from the delay Doppler domain to an actual time-frequency resource, which is equivalent to adding $\Delta T$ and/or $\Delta f$. Higher delay and Doppler resolution can be obtained by converting to the delay Doppler domain analysis through an actual channel. In this way, it can be avoided that $M$ and $N$ are increased causing a large amount of occupied resources. Therefore, the embodiments of this application improve utilization of resources. $M$ can be understood as a quantity of resource grids in a delay dimension of the delay Doppler resource block or a quantity of resource grids in a frequency dimension of the time-frequency resource block. $N$ can be understood as a quantity of resource grids in a Doppler dimension of the delay Doppler resource block or a quantity of resource grids in the time dimension of the time-frequency resource block. The resource grid can be understood as a resource element.

As shown in FIG. 6, the following uses an example in which sparse mapping is performed in both the time domain and the frequency domain for description. In FIG. 6, for data occupying 4*2 resource grids, when sparse mapping is performed in the time domain and frequency domain based on sparse spacing of one resource grid, symbol spacing of the actually mapped time-frequency symbols is $2\Delta T$ and subcarrier spacing is $2\Delta f$. Based on Formula (8), the Doppler resolution and delay resolution are improved by two times separately. In this case, the resource grid with the resource spacing can map other data. For example, in the case of a plurality of data packets or multi-user multiplexing, blank resource grids between the resource grids mapping data can also be filled with other data to avoid resource waste.

This embodiment of this application transforms a delay Doppler domain data set on a delay Doppler resource block into a time-frequency domain data set; maps the time-frequency domain data set to a time-frequency resource block based on a preset resource mapping rule; and sends the time-frequency domain data set on the time-frequency resource block. The resource mapping rule includes sparse mapping. In this way, it can be avoided that $M$ and $N$ are increased causing a large amount of occupied resources. Therefore, the embodiments of this application improve utilization of resources.

It should be understood that the foregoing receiving device and sending device may both be a user device, or one of the receiving device and sending device may be a user device, and the other one may be a network device. This is not further limited herein.

Optionally, in some embodiments, the resource mapping rule further includes interleaving mapping for a plurality of time-frequency domain data sets, and the interleaving mapping includes any one of the following:

performing the interleaving mapping in only a frequency domain; and
performing the interleaving mapping in both a time domain and a frequency domain.

In this embodiment, the plurality of time-frequency domain data sets may belong to one or more receiving devices. In the following embodiments, an example in which the plurality of time-frequency data sets belong to a plurality of receiving devices is used for description. The foregoing interleaving mapping can be understood as interleaving mapping of a plurality of time-frequency data sets according to a certain interleaving period. It should be understood that performing interleaving mapping indicates performing sparse mapping. Using two time-frequency domain data sets as an example for description, if interleaving mapping and sparse mapping of the two time-frequency domain data sets are only performed in the frequency domain, sparse mapping of each time-frequency domain data set is performed in the frequency domain, and data of another time-frequency domain data set is mapped to the resource grid of the sparse spacing corresponding to one time-frequency domain data set, so that alternating mapping of data of the two time-frequency domain data sets is performed in sequence in the frequency domain. For example, a resource grid 1, a resource grid 2, a resource grid 3, and a resource grid 4 are four resource grids successively adjacent to each other in one time unit, and the resource grid 1, the resource grid 2, the resource grid 3, and the resource grid 4 correspond to different frequencies. In this case, the resource grid 1 and the resource grid 3 map data of one time-frequency domain data set, and the resource grid 2 and the resource grid 4 map data of another time-frequency domain data set. Similar to the interleaving mapping in the time domain, for example, a resource grid 5, a resource grid 6, a resource grid 7, and a resource grid 8 are four resource grids adjacent to each other in one frequency unit, and the resource grid 5, the resource grid 6, the resource grid 7, and the resource grid 8 correspond to different times. In this case, the resource grid 5 and the resource grid 7 map data of one time-frequency domain data set, and the resource grid 6 and the resource grid 8 map data of another time-frequency domain dataset.

In this embodiment, interleaving mapping of a plurality of time-frequency domain data sets is performed to avoid resource waste caused by sparse spacing, thereby further improving resource utilization.

In other words, in this embodiment of this application, the mapping rule satisfies any one of the following:

rule 1: that for the time-frequency domain data sets of the plurality of receiving devices, the interleaving mapping is performed only in a frequency domain, the continuous mapping is performed in a time domain, and the sparse mapping is performed in the frequency domain; and
rule 2: that for the time-frequency domain data sets of the plurality of receiving devices, the interleaving mapping is performed in both a frequency domain and a time domain, and the sparse mapping is performed in both the time domain and the frequency domain.

Optionally, in some embodiments, a step of mapping the time-frequency domain data set to a time-frequency resource block based on a preset resource mapping rule includes:

in a case that first time-frequency domain data sets of at least two receiving devices exist in a target time unit, for the first time-frequency domain data sets, performing the sparse mapping and the interleaving mapping in the frequency domain; and
for a second time-frequency domain data set in a target frequency unit, performing continuous mapping in the time domain.

The target time unit is any time unit of the time-frequency resource block, and the target frequency unit is any frequency unit of the time-frequency resource block.

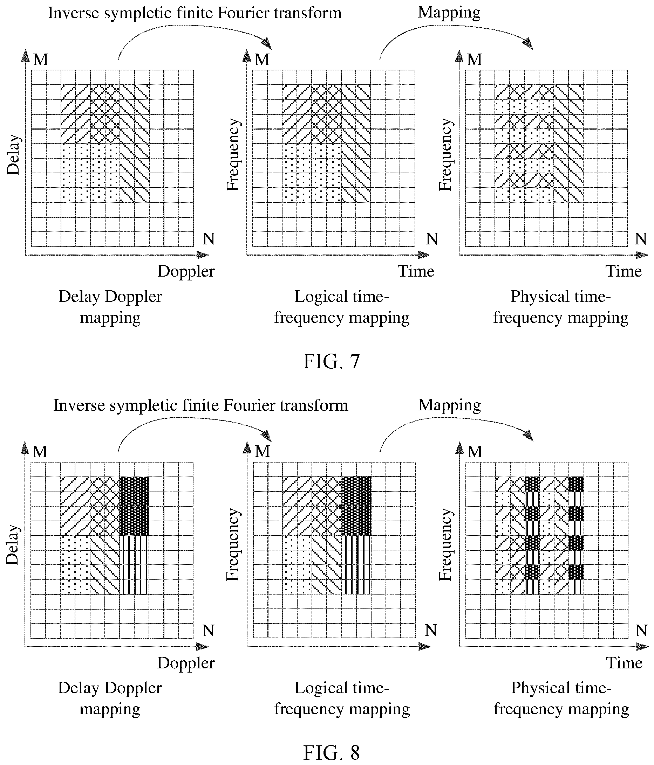

In this embodiment of this application, because sent data are of different sizes, to avoid wasting resources of the sparse spacing caused by separate sparse mapping, and assuming that one time unit only includes a time-frequency domain data set, sparse mapping and interleaving mapping are not performed in the frequency domain for the time unit. It should be understood that in this embodiment, continuous mapping is performed in the time domain, that is, interleaving mapping and sparse mapping are not performed. The foregoing time unit may be one or two resource grids. As shown in FIG. 7, one time unit is one resource grid. It is assumed that one time unit has time-frequency domain resource sets of two receiving devices. In this case, the sparse spacing for sparse mapping in the frequency domain is a resource grid.

In some other embodiments, the step of the mapping the time-frequency domain data set to a time-frequency resource block based on a preset resource mapping rule includes:

in a case that first time-frequency domain data sets of at least two receiving devices exist in a target time unit, for the first time-frequency domain data sets, performing the sparse mapping and the interleaving mapping in the frequency domain; and

in a case that second time-frequency domain data sets of at least two receiving devices exist in a target frequency unit, for the second time-frequency domain data sets, performing the sparse mapping and the interleaving mapping in the time domain.

The target time unit is any time unit of the time-frequency resource block, and the target frequency unit is any frequency unit of the time-frequency resource block.

In this embodiment of this application, because sent data is of different sizes, to avoid wasting resources of sparse spacing caused by separate sparse mapping, and assuming that only one time-frequency domain data set is included in one time unit, sparse mapping and interleaving mapping are not performed in the frequency domain for the time unit; and assuming that only one time-frequency domain data set is included in one frequency unit, sparse mapping and interleaving mapping are not performed in the time domain for the frequency unit. A time unit may be one or two resource grids, and a frequency unit may be one or two resource grids. As shown in FIG. 8, using an example in which one time unit is one resource grid, and one frequency unit is one resource grid for description. In this embodiment, one time unit has time-frequency domain resource sets of two receiving devices. In this case, the sparse spacing for sparse mapping in the frequency domain is one resource grid. One frequency unit has time-frequency domain resource sets of three receiving devices. In this case, the sparse spacing for sparse mapping in the time domain is two resource grids.

It should be understood that the resource mapping rule can be agreed by a protocol or configured by a sending device. When the rule is configured by the sending device, and before a step of sending the time-frequency domain data set, the method further includes:

sending first indication information to a receiving device, where the first indication information is used to indicate the resource mapping rule.

In this embodiment, the sending device can send the first indication information through a broadcast message, radio resource control (Radio Resource Control, RRC) signaling, downlink control information (Downlink Control Information, DCI) signaling, and the like, which is not further limited herein.

Optionally, in some embodiments, before a step of sending the time-frequency domain data set, the method further includes:

sending second indication information to a receiving device.

The second indication information is used to indicate that a time-frequency resource block where the time-frequency domain data set is located is at a start resource location in a time-frequency resource grid corresponding to a current processing time unit; or in a case that the time-frequency resource grid corresponding to the current processing time unit is divided into a plurality of time-frequency resource blocks based on the preset rule, the second indication information is used to indicate an index value corresponding to the time-frequency resource block where the time-frequency data set is located.

In this embodiment, the sending device can send the first indication information through a broadcast message, RRC signaling, downlink control, DCI signaling, and the like, which is not further limited herein.

It should be understood that a length of a radio frame (radio frame) is 10ms, and is divided into ten subframes (subframe). A length of a subframe is 1ms. In the LTE, a subframe is a basic resource unit for physical layer packet processing, that is, data in a subframe (that is, a transport block (Transport Block, TB)) is encoded and decoded together. In the new radio (New Radio, NR), the subframe is further divided into slots (slot). The slot is a basic resource unit for data packet processing. The processing time unit can be understood as a basic resource unit. The current processing time unit can be understood as a current processing subframe or a current processing time slot.

It should be understood that the foregoing preset rule may be either a rule agreed by a protocol or a rule indicated by a sending device, which is not further limited herein. When the time-frequency resource grid corresponding to a current processing time unit is divided into a plurality of time-frequency resource blocks based on the preset rule, each time-frequency resource block divided has a corresponding index value.

To better understand this application, the specific implementation process of this application is described in detail below through specific embodiments.

Embodiment 1: In a multi-user multiplexing scenario, interleaving placement of different pieces of user data is used to achieve functions of increasing delay and Doppler resolution and improving channel estimation accuracy. The time-frequency domain resolution of FIG. 6 is:

$$\Delta v = \frac{1}{N \cdot 2\Delta T}, \Delta \tau = \frac{1}{M \cdot 2\Delta f} \quad (9)$$

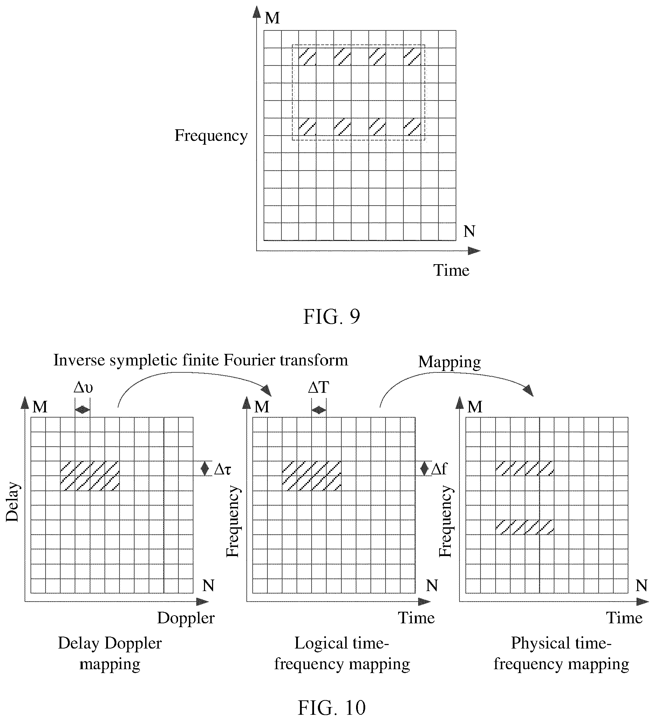

In this embodiment of this application, sparse mapping of the transformed delay Doppler QAM symbol can be performed on a physical time-frequency domain resource to improve the delay and Doppler resolution of the channel estimation. Assuming that after sparse mapping of user data with a dimension of $l \times k$, symbol spacing and subcarrier spacing are $a\Delta T$ and $b\Delta f$ respectively, and the mapped data is distributed in one rectangular resource block. As shown in FIG. 9, a range of resources occupied by sparse mapping is shown in the dotted box.

If there is only single-user data, a size of the physical time-frequency resource block that needs to be allocated to the user is $[l + (l - 1)(b - 1)] * [k + (k - 1)(a - 1)]$. Compared with a size of original data, additional resource overhead is:

$$1 - \frac{l * k}{[l + (l - 1)(b - 1)] * [k + (k - 1)(a - 1)]} \quad (10)$$

To further avoid wasting resources, sparse mapping of user data of a plurality of users can be performed on one physical time-frequency resource block by interleaving. Both a and b are positive integers.

To avoid wasting resources, sparse mapping of a plurality of users can be performed on one physical time-frequency resource block by interleaving. For details, refer to FIG. 8. In FIG. 8, there are a total of $P$ users, represented by different filled grids. Each user's data block is a QAM symbol set of one $l \times k$ delay Doppler domain. Total logical time-frequency resources occupied by $P$ pieces of user data are $P * l * k$. Data of $P$ users are interleaved by using the method in this application and then mapped to physical resources in the frequency domain. The occupied quantity is still $P * l * k$. Therefore, in a case that there are a plurality users, using interleaving mapping and sparse mapping provided in this application does not generate additional overhead.

It should be understood that the data sending method in this application can be applied for both uplink and downlink.

Optionally, in some embodiments, when the method is applied for downlink, each UE resource is scheduled by a base station according to an optimized interleaving manner. Each LTE only receives data on the resource that is scheduled to the LTE, performs OTFS transform according to the characteristic of the resource block, that is, ($M, N, \Delta f$), and performs channel measurement, channel estimation, and decoding in the delay Doppler domain.

In some other embodiments, when the method is applied for uplink, each UE resource also needs to be scheduled by a base station to form an optimized interleaving manner. Each UE only performs OTFS transform on the resources scheduled to the UE according to the characteristic ($M, N, \Delta f$) of the resource block, and sends a QAM symbol converted to the frequency domain. After receiving the message sent by the UE, the base station separately decodes and processes messages of each UE according to the known resource scheduling.

Passing ($M, N, \Delta f$) can be determined according to the following manner:

that the base station directly indicates the resource location to the UE;
that several frame structure modes of different interleaving manners are specified by a protocol, indicating an intra frame resource index to the UE; and
that several frame structure modes of different interleaving manners are specified by a protocol, and the UE selects the resource location according to an ID of the UE.

Embodiment 2: In a multi-user multiplexing scenario, interleaving placement of different pieces of user data is used to achieve functions of increasing delay and Doppler resolution and improving channel estimation accuracy.

In this embodiment of this application, sparse mapping of the transformed QAM symbol in the delay Doppler domain can be performed in the frequency domain, thereby improving delay resolution of the channel estimation. The Doppler resolution can only be implemented by selecting a larger $N$. As shown in FIG. 10, compared with FIG. 6, to obtain twice as much as the Doppler resolution, a quantity of time domain resources needs to be set to $2N$. In a case that the total quantity of resources remains unchanged, the frequency domain resources become $\frac{M}{2}$. Therefore, to obtain twice as much as the delay resolution, $\Delta f$ needs to be changed to 4 times as much. Therefore, the time domain and frequency domain resolutions of this embodiment are:

$$\Delta v = \frac{1}{2N\Delta T}, \Delta \tau = \frac{1}{\frac{M}{2} \cdot 4\Delta f} \quad (11)$$

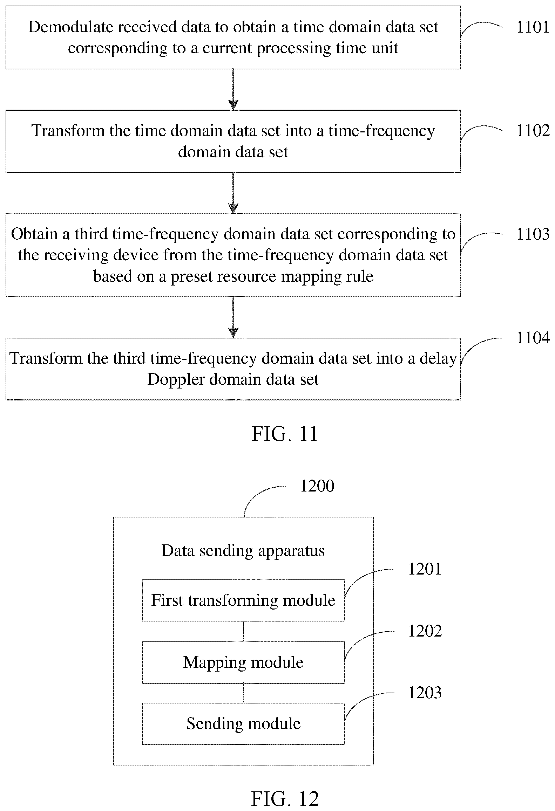

Referring to FIG. 11, FIG. 11 is a flowchart of a data receiving and processing method according to an embodiment of this application. The method is performed by a receiving device, and as shown in FIG. 11, includes the following steps.

Step 1101: Demodulate received data to obtain a time domain data set corresponding to a current processing time unit.

Step 1102: Transform the time domain data set into a time-frequency domain data set.

Step 1103: Obtain a third time-frequency domain data set corresponding to the receiving device from the time-frequency domain data set based on a preset resource mapping rule.

Step 1104: Transform the third time-frequency domain data set into a delay Doppler domain data set.

The resource mapping rule includes sparse mapping.

Optionally, the sparse mapping includes any one of the following:

performing continuous mapping in a time domain, and performing the sparse mapping in a frequency domain; and performing sparse mapping in both the time domain and the frequency domain.

Optionally, the resource mapping rule further includes interleaving mapping for a plurality of time-frequency domain data sets, and the interleaving mapping includes any one of the following:

performing the interleaving mapping in only a frequency domain; and performing the interleaving mapping in both a time domain and a frequency domain.

Optionally, the plurality of time-frequency domain data sets belong to a plurality of receiving devices.

Optionally, the mapping rule satisfies any one of the following:

rule 1: that for the time-frequency domain data sets of the plurality of receiving devices, the interleaving mapping is performed only in the frequency domain, the continuous mapping is performed in the time domain, and the sparse mapping is performed in the frequency domain; and

rule 2: that for the time-frequency domain data sets of the plurality of receiving devices, the interleaving mapping is performed in both the frequency domain and the time domain, and the sparse mapping is performed in both the time domain and the frequency domain.

Optionally, before a step of demodulating received data to obtain a time domain data set corresponding to a current processing time unit, the method further includes:
receiving first indication information sent by a sending device, where the first indication information is used to indicate the resource mapping rule.

Optionally, before a step of demodulating received data to obtain a time domain data set corresponding to a current processing time unit, the method further includes:
receiving second indication information sent by a sending device.

The second indication information is used to indicate that a time-frequency resource block where the time-frequency domain data set is located is at a start resource location in a time-frequency resource grid corresponding to a current processing time unit; or in a case that the time-frequency resource grid corresponding to the current processing time unit is divided into a plurality of time-frequency resource blocks based on the preset rule, the second indication information is used to indicate an index value corresponding to the time-frequency resource block where the time-frequency data set is located.

It should be noted that this embodiment serves as an implementation of the receiving device corresponding to the embodiment shown in FIG. 5. For specific implementations of this embodiment, reference may be made to related description of the embodiment shown in FIG. 5, with the same effects achieved. To avoid repetition, details are not described herein again.

It should be noted that an execution subject of the data sending method according to an embodiment of this application may be a data sending apparatus, or a control module for performing the data sending method in the data sending apparatus. In this embodiment of this application, the data sending apparatus according to an embodiment of this application is described by using an example in which the data sending apparatus performs the data sending method.

Referring to FIG. 12, FIG. 12 is a structural diagram of a data sending apparatus according to an embodiment of this application. As shown in FIG. 12, the data sending apparatus 1200 includes:

a first transforming module 1201, configured to transform a delay Doppler domain data set on a delay Doppler resource block into a time-frequency domain data set;
a mapping module 1202, configured to map the time-frequency domain data set to a time-frequency resource block based on a preset resource mapping rule; and

a sending module 1203, configured to send the time-frequency domain data set on the time-frequency resource block.

The resource mapping rule includes sparse mapping.

Optionally, the sparse mapping includes any one of the following:

performing continuous mapping in a time domain, and performing the sparse mapping in a frequency domain; and performing sparse mapping in both the time domain and the frequency domain.

Optionally, the resource mapping rule further includes interleaving mapping for a plurality of time-frequency domain data sets, and the interleaving mapping includes any one of the following:

performing the interleaving mapping in only a frequency domain; and performing the interleaving mapping in both a time domain and a frequency domain.

Optionally, the plurality of time-frequency domain data sets belong to a plurality of receiving devices.

Optionally, the mapping rule satisfies any one of the following:

rule 1: that for the time-frequency domain data sets of the plurality of receiving devices, the interleaving mapping is performed only in the frequency domain, the continuous mapping is performed in the time domain, and the sparse mapping is performed in the frequency domain; and rule 2: that for the time-frequency domain data sets of the plurality of receiving devices, the interleaving mapping is performed in both the frequency domain and the time domain, and the sparse mapping is performed in both the time domain and the frequency domain.

Optionally, the mapping module 1202 is specifically configured to:

in a case that first time-frequency domain data sets of at least two receiving devices exist in a target time unit, for the first time-frequency domain data sets, perform the sparse mapping and the interleaving mapping in the frequency domain; and for a second time-frequency domain data set in a target frequency unit, perform continuous mapping in the time domain.

The target time unit is any time unit of the time-frequency resource block, and the target frequency unit is any frequency unit of the time-frequency resource block.

Optionally, the mapping module 1202 is specifically configured to:

in a case that first time-frequency domain data sets of at least two receiving devices exist in a target time unit, for the first time-frequency domain data sets, perform the sparse mapping and the interleaving mapping in the frequency domain; and in a case that second time-frequency domain data sets of at least two receiving devices exist in a target frequency unit, for the second time-frequency domain data sets, perform the sparse mapping and the interleaving mapping in the time domain.

The target time unit is any time unit of the time-frequency resource block, and the target frequency unit is any frequency unit of the time-frequency resource block.

Optionally, the sending module 1203 is further configured to send first indication information to a receiving device, where the first indication information is used to indicate the resource mapping rule.

Optionally, the sending module 1203 is further configured to send second indication information to a receiving device.

The second indication information is used to indicate that a time-frequency resource block where the time-frequency domain data set is located is at a start resource location in a time-frequency resource grid corresponding to a current processing time unit; or in a case that the time-frequency resource grid corresponding to the current processing time unit is divided into a plurality of time-frequency resource blocks based on the preset rule, the second indication information is used to indicate an index value corresponding to the time-frequency resource block where the time-frequency data set is located.

The data sending apparatus 1200 provided in this embodiment of this application can implement the processes implemented by the sending device in the method embodiment of FIG. 5. To avoid repetition, details are not described herein again.

It should be noted that an execution subject of the data receiving and processing method according to an embodiment of this application may be a data receiving and processing apparatus, or a control module for performing the data receiving and processing method in the data receiving and processing apparatus. In this embodiment of this application, the data receiving and processing apparatus according to an embodiment of this application is described by using an example in which the data receiving and processing apparatus performs the data receiving and processing method.

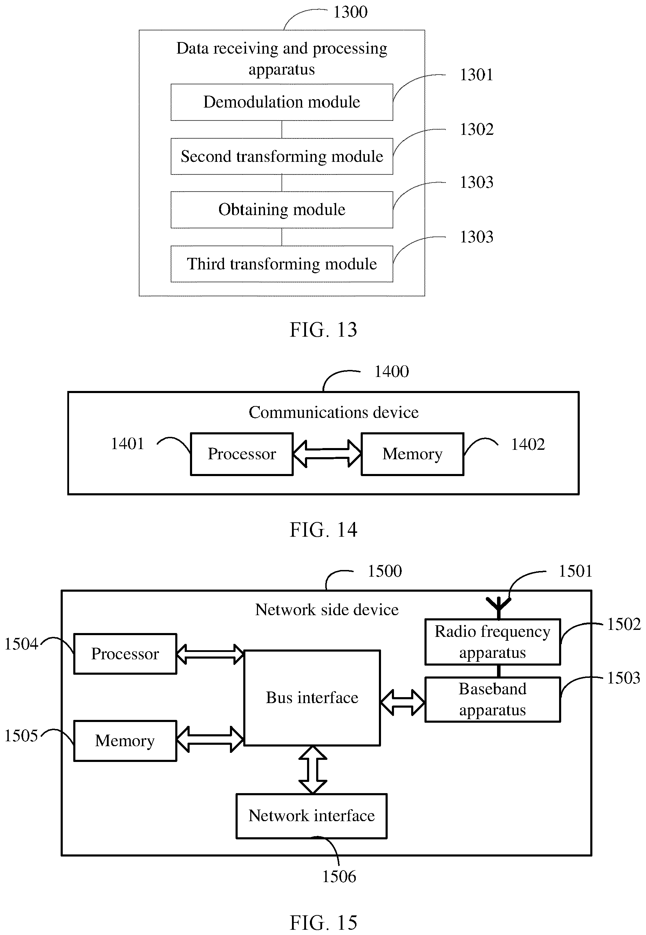

Referring to FIG. 13, FIG. 13 is a structural diagram of a data receiving and processing apparatus according to an embodiment of this application. As shown in FIG. 13, the receiving and processing apparatus 1300 includes:

a demodulation module 1301, configured to demodulate received data to obtain a time domain data set corresponding to a current processing time unit;

a second transforming module 1302, configured to transform the time domain data set into a time-frequency domain data set;

an obtaining module 1303, configured to obtain a third time-frequency domain data set corresponding to the receiving device from the time-frequency domain data set based on a preset resource mapping rule; and

a third transforming module 1304, configured to transform the third time-frequency domain data set into a delay Doppler domain data set.

The resource mapping rule includes sparse mapping.

Optionally, the sparse mapping includes any of the following:

performing continuous mapping in a time domain, and performing the sparse mapping in a frequency domain; and

performing sparse mapping in both the time domain and the frequency domain.

Optionally, the resource mapping rule further includes interleaving mapping for a plurality of time-frequency domain data sets, and the interleaving mapping includes any one of the following:

performing the interleaving mapping in only a frequency domain; and

performing the interleaving mapping in both a time domain and a frequency domain.

Optionally, the plurality of time-frequency domain data sets belong to a plurality of receiving devices.

Optionally, the mapping rule satisfies any one of the following:

rule 1: that for the time-frequency domain data sets of the plurality of receiving devices, the interleaving mapping is performed only in the frequency domain, the continuous mapping is performed in the time domain, and the sparse mapping is performed in the frequency domain; and

rule 2: that for the time-frequency domain data sets of the plurality of receiving devices, the interleaving mapping is performed in both the frequency domain and the time domain, and the sparse mapping is performed in both the time domain and the frequency domain.

Optionally, before a step of demodulating received data to obtain a time domain data set corresponding to a current processing time unit, the method further includes:

receiving first indication information sent by a sending device, where the first indication information is used to indicate the resource mapping rule.

Optionally, before a step of demodulating received data to obtain a time domain data set corresponding to a current processing time unit, the method further includes:

receiving second indication information sent by sending device.

The second indication information is used to indicate that a time-frequency resource block where the time-frequency domain data set is located is at a start resource location in a time-frequency resource grid corresponding to a current processing time unit; or in a case that the time-frequency resource grid corresponding to the current processing time unit is divided into a plurality of time-frequency resource blocks based on the preset rule, the second indication information is used to indicate an index value corresponding to the time-frequency resource block where the time-frequency data set is located.

The data receiving and processing apparatus 1300 provided in this embodiment of this application can implement the processes implemented by the receiving device in the method embodiment of FIG. 11. To avoid repetition, details are not described herein again.

The data sending apparatus and data receiving and processing apparatus in this embodiment of this application may be an apparatus, or a component, an integrated circuit, or a chip in a terminal. The apparatus may be a mobile terminal, or a non-mobile terminal. For example, the mobile device may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The data sending apparatus and data receiving and processing apparatus in this embodiment of this application may be an apparatus with an operating system. The operating system may be an Android (Android) operating system, an iOS operating system, or another possible operating system. This is not specifically limited in the embodiments of this application.

The data sending apparatus and the data receiving and processing apparatus provided in this embodiment of this application can implement the processes implemented in the method embodiments in FIG. 5 to FIG. 11, with the same technical effect achieved. To avoid repetition, details are not described herein again.

Optionally, as shown in FIG. 14, an embodiment of this application further provides a communications device 1400, including a processor 1401, a memory 1402, and a program or an instruction stored in the memory 1402 and executable on the processor 1401. For example, when the communications device 1400 is a sending device, and the program or the instruction is executed by the processor 1401, the processes of the foregoing data sending method embodiments are implemented, with the same technical effects achieved. To avoid repetition, details are not described herein again. When the communications device 1400 is a receiving device, and the program or the instruction is executed by the processor 1401, the processes of the foregoing data receiving and processing method embodiments are implemented, with the same technical effects achieved. To avoid repetition, details are not described herein again.

Specifically, an embodiment of this application further provides a network-side device. The network-side device may be a receiving device or a sending device. When the receiving device is a terminal, the sending device may be another terminal or network-side device. When the receiving device is a network-side device, the sending device is a terminal. As shown in FIG. 15, a network-side device 1500 includes an antenna 1501, a radio frequency apparatus 1502, and a baseband apparatus 1503. The antenna 1501 is connected to the radio frequency apparatus 1502. In an uplink direction, the radio frequency apparatus 1502 receives information by using the antenna 1501, and sends the received information to the baseband apparatus 1503 for processing. In a downlink direction, the baseband apparatus 1503 processes information that needs to be sent, and sends processed information to the radio frequency apparatus 1502. The radio frequency apparatus 1502 processes the received information, and sends processed information by using the antenna 1501.

The frequency band processing apparatus may be located in the baseband apparatus 1503. The method performed by the network side device in the above embodiment may be implemented in the baseband apparatus 1503. The baseband apparatus 1503 includes a processor 1504 and a memory 1505.

For example, the baseband apparatus 1503 may include at least one baseband board. A plurality of chips are disposed on the baseband board. As shown in FIG. 15, one chip is, for example, the processor 1504, and is connected to the memory 1505, to invoke a program in the memory 1505 to perform an operation of the network side device shown in the foregoing method embodiment.

The baseband apparatus 1503 may further include a network interface 1506, configured to exchange information with the radio frequency apparatus 1502, where the interface is, for example, a common public radio interface (common public radio interface, CPRI for short).

Specifically, the network side device in this embodiment of this application further includes: an instruction or a program stored in the memory 1505 and executable on the processor 1504. When the network side device is a sending device, the processor 1504 invokes the instruction or the program in the memory 1505 to control execution of the method executed by the modules shown in FIG. 12. When the network side device is a receiving device, the processor 1504 invokes the instruction or the program in the memory 1505 to execute the method executed by the modules shown in FIG. 13, with the same technical effect achieved. To avoid repetition, details are not described herein again.

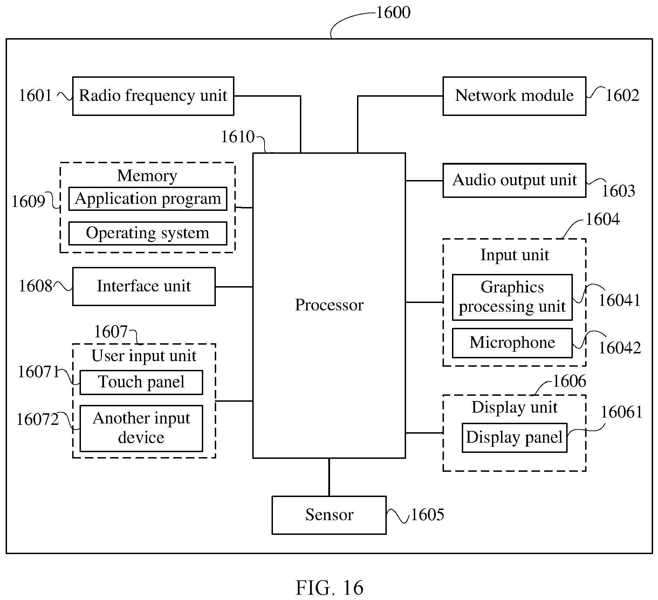

FIG. 16 is a schematic diagram of a hardware structure of a terminal device for implementing the embodiments of this application.

The terminal 1600 includes but is not limited to components such as a radio frequency unit 1601, a network module 1602, an audio output unit 1603, an input unit 1604, a sensor 1605, a display unit 1606, a user input unit 1607, an interface unit 1608, a memory 1609, and a processor 1610.

Persons skilled in the art can understand that the terminal device 1600 may further include a power supply (for example, a battery) that supplies power to the components. The power supply may be logically connected to the processor 1610 through a power management system, so as to implement functions such as charging management, discharging management, and power consumption management through the power management system. The terminal device is not limited to the terminal device structure shown in FIG. 16. The terminal device may include more or fewer components than those shown in the figure, or combine some of the components, or arrange the components differently.

It should be understood that, in this embodiment of this application, the input unit 1604 may include a graphics processing unit (Graphics Processing Unit, GPU) 16041 and a microphone 16042. The graphics processing unit 16041 processes image data of a static picture or a video obtained by an image capture apparatus (such as a camera) in a video capture mode or an image capture mode. The display unit 1606 may include a display panel 16061, and the display panel 16061 may be configured in a form of a liquid crystal display, an organic light-emitting diode, or the like. The user input unit 1607 includes a touch panel 16071 and another input device 16072. The touch panel 16071 is also referred to as a touchscreen. The touch panel 16071 may include two parts: a touch detection apparatus and a touch controller. The another input device 16072 may include but are not limited to a physical keyboard, a function key (for example, a volume control key or a switch key), a trackball, a mouse, and a joystick. Details are not described herein.

In this embodiment of this application, the radio frequency unit 1601 may, after receiving downlink data from a network device, send the downlink information to the processor 1610 for processing, and in addition, send uplink data to the network device. Generally, the radio frequency unit 1601 includes but is not limited to an antenna, at least one amplifier, a transceiver, a coupler, a low noise amplifier, a duplexer, and the like.

The memory 1609 may be configured to store a software program or an instruction and various data. The memory 1609 may mainly include a program or instruction storage area and a data storage area. The program or instruction storage area may store an operating system, and an application or an instruction required by at least one function (for example, a sound playing function or an image playing function). In addition, the memory 1609 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1610 may include one or more processing units. Optionally, an application processor and a modem processor may be integrated into the processor 1610. The application processor mainly processes an operating system, a user interface, an application, an instruction, or the like. The modem processor mainly processes wireless communications, for example, a baseband processor. It can be understood that, alternatively, the modem processor may not be integrated into the processor 1610.

When the sending device is a terminal and the receiving device is another terminal or a network side device,

the processor 1610 is configured to transform a delay Doppler domain data set on a delay Doppler resource block into a time-frequency domain data set; and map the time-frequency domain data set to a time-frequency resource block based on a preset resource mapping rule; and
the radio frequency unit 1601 is configured to send the time-frequency domain data set on the time-frequency resource block.

The resource mapping rule includes sparse mapping.

It should be understood that, in this embodiment, the foregoing processor 1610 and the radio frequency unit 1601 can implement various processes implemented by the sending device in the method embodiment in FIG. 5. To avoid repetition, details are not described herein again.

When the receiving device is a terminal and the sending device is another terminal or a network side device, the radio frequency unit 1601 is configured to:

demodulate received data to obtain a time domain data set corresponding to a current processing time unit;
transform the time domain data set into a time-frequency domain data set;
obtain a third time-frequency domain data set corresponding to the receiving device from the time-frequency domain data set based on a preset resource mapping rule; and
transform the third time-frequency domain data set into a delay Doppler domain data set.

The resource mapping rule includes sparse mapping.

It should be understood that, in this embodiment, the foregoing processor 1610 and the radio frequency unit 1601 can implement various processes implemented by the receiving device in the method embodiment in FIG. 11. To avoid repetition, details are not described herein again.

An embodiment of this application further provides a readable storage medium. The readable storage medium stores a program or an instruction. When the program or the instruction is executed by a processor, the processes in the foregoing embodiments of the data sending method or data receiving and processing method are implemented, and the same technical effect can be achieved. To avoid repetition, details are not described herein again.

The processor is a processor in the electronic device in the foregoing embodiment. The readable storage medium includes a computer-readable storage medium such as a computer read-only memory (Read-Only Memory, ROM), a random access memory (Random Access Memory, RAM), a magnetic disk, an optical disc, or the like.

An embodiment of this application further provides a chip. The chip includes a processor and a communications interface, and the communications interface is coupled to the processor. The processor is configured to run a program or an instruction of a network-side device, to implement various processes of the foregoing data receiving and processing method embodiments, with the same technical effects achieved. To avoid repetition, details are not described herein again.

It should be understood that the chip mentioned in this embodiment of the present application may also be referred to as a system-level chip, a system chip, a system on chip, a system chip on chip, and the like.

It can be understood that the embodiments described in the present disclosure may be implemented by hardware, software, firmware, middleware, microcode, or a combination thereof. For implementation with hardware, the module, unit, submodule, subunit, and the like may be implemented in one or more application specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit for implementing the functions of this application, or a combination thereof.

It should be noted that in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the methods and apparatuses in the embodiments of the present application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementation manners, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of this application essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a base station, or the like) to perform the method described in the embodiments of the present application.

The embodiments of this application are described above with reference to the accompanying drawings, but this application is not limited to the foregoing specific implementation manners. The foregoing specific implementation manners are merely schematic instead of restrictive. Under enlightenment of this application, a person of ordinary skills in the art may make many forms without departing from aims and the protection scope of claims of this application, all of which fall within the protection scope of this application.

**Claims**

1. A data sending method, performed by a sending device and comprising:

   transforming a delay Doppler domain data set on a delay Doppler resource block into a time-frequency domain data set;
   mapping the time-frequency domain data set to a time-frequency resource block based on a preset resource mapping rule; and
   sending the time-frequency domain data set on the time-frequency resource block, wherein
   the resource mapping rule comprises sparse mapping.

2. The method according to claim 1, wherein the sparse mapping comprises any one of following:

   performing continuous mapping in a time domain, and performing the sparse mapping in a frequency domain; and
   performing sparse mapping in both the time domain and the frequency domain.

3. The method according to claim 1, wherein the resource mapping rule further comprises interleaving mapping for a plurality of time-frequency domain data sets, and the interleaving mapping comprises any one of following:

performing the interleaving mapping in only a frequency domain; and
performing the interleaving mapping in both a time domain and a frequency domain.

4. The method according to claim 3, wherein the plurality of time-frequency domain data sets belong to a plurality of receiving devices.

5. The method according to claim 3, wherein the mapping rule satisfies any one of following:

    rule 1: that for time-frequency domain data sets of a plurality of receiving devices, the interleaving mapping is performed only in a frequency domain, continuous mapping is performed in a time domain, and the sparse mapping is performed in the frequency domain; and
    rule 2: that for time-frequency domain data sets of a plurality of receiving devices, the interleaving mapping is performed in both a frequency domain and a time domain, and the sparse mapping is performed in both the time domain and the frequency domain.

6. The method according to the claim 5, wherein the mapping the time-frequency domain data set to the time-frequency resource block based on the preset resource mapping rule comprises:

    in a case that first time-frequency domain data sets of at least two receiving devices exist in a target time unit, for the first time-frequency domain data sets, performing the sparse mapping and the interleaving mapping in a frequency domain; and
    for a second time-frequency domain data set in a target frequency unit, performing continuous mapping in a time domain, wherein
    the target time unit is any time unit of the time-frequency resource block, and the target frequency unit is any frequency unit of the time-frequency resource block.

7. The method according to the claim 5, wherein the mapping the time-frequency domain data set to the time-frequency resource block based on the preset resource mapping rule comprises:

    in a case that first time-frequency domain data sets of at least two receiving devices exist in a target time unit, for the first time-frequency domain data sets, performing the sparse mapping and the interleaving mapping in a frequency domain; and
    in a case that second time-frequency domain data sets of at least two receiving devices exist in a target frequency unit, for the second time-frequency domain data sets, performing the sparse mapping and the interleaving mapping in a time domain; wherein
    the target time unit is any time unit of the time-frequency resource block, and the target frequency unit is any frequency unit of the time-frequency resource block.

8. The method according to claim 1, wherein before the sending the time-frequency domain data set, the method further comprises:
sending first indication information to a receiving device, wherein the first indication information is used to indicate the resource mapping rule.

9. The method according to claim 1, wherein before the sending the time-frequency domain data set, the method further comprises:

    sending second indication information to a receiving device; wherein
    the second indication information is used to indicate that a time-frequency resource block where the time-frequency domain data set is located is at a start resource location in a time-frequency resource grid corresponding to a current processing time unit; or in a case that the time-frequency resource grid corresponding to the current processing time unit is divided into a plurality of time-frequency resource blocks based on the preset rule, the second indication information is used to indicate an index value corresponding to the time-frequency resource block where the time-frequency data set is located.

10. A data receiving and processing method, performed by a receiving device and comprising:

    demodulating received data to obtain a time domain data set corresponding to a current processing time unit;
    transforming the time domain data set into a time-frequency domain data set;

obtaining a third time-frequency domain data set corresponding to the receiving device from the time-frequency domain data set based on a preset resource mapping rule; and

transforming the third time-frequency domain data set into a delay Doppler domain data set, wherein the resource mapping rule comprises sparse mapping.

**11.** The method according to claim 10, wherein the sparse mapping comprises any one of following:

performing continuous mapping in a time domain, and performing the sparse mapping in a frequency domain; and performing sparse mapping in both the time domain and the frequency domain.

**12.** The method according to claim 10, wherein the resource mapping rule further comprises interleaving mapping for a plurality of time-frequency domain data sets, and the interleaving mapping comprises any one of following:

performing the interleaving mapping in only a frequency domain; and performing the interleaving mapping in both a time domain and a frequency domain.

**13.** The method according to claim 12, wherein the plurality of time-frequency domain data sets belong to a plurality of receiving devices.

**14.** The method according to claim 12, wherein the mapping rule satisfies any one of following:

rule 1: that for time-frequency domain data sets of a plurality of receiving devices, the interleaving mapping is performed only in a frequency domain, continuous mapping is performed in a time domain, and the sparse mapping is performed in the frequency domain; and

rule 2: that for time-frequency domain data sets of a plurality of receiving devices, the interleaving mapping is performed in both a frequency domain and a time domain, and the sparse mapping is performed in both the time domain and the frequency domain.

**15.** The method according to claim 10, wherein before the demodulating received data to obtain the time domain data set corresponding to the current processing time unit, the method further comprises:

receiving first indication information send by a sending device, wherein the first indication information is used to indicate the resource mapping rule.

**16.** The method according to claim 10, wherein before the demodulating received data to obtain the time domain data set corresponding to the current processing time unit, the method further comprises:

receiving second indication information sent by a sending device, wherein

the second indication information is used to indicate that a time-frequency resource block where the time-frequency domain data set is located is at a start resource location in a time-frequency resource grid corresponding to a current processing time unit; or in a case that the time-frequency resource grid corresponding to the current processing time unit is divided into a plurality of time-frequency resource blocks based on the preset rule, the second indication information is used to indicate an index value corresponding to the time-frequency resource block where the time-frequency data set is located.

**17.** A data sending apparatus, comprising:

a first transforming module, configured to transform a delay Doppler domain data set on a delay Doppler resource block into a time-frequency domain data set;

a mapping module, configured to map the time-frequency domain data set to a time-frequency resource block based on a preset resource mapping rule; and

a sending module, configured to send the time-frequency domain data set on the time-frequency resource block, wherein

the resource mapping rule comprises sparse mapping.

**18.** The apparatus according to claim 17, wherein the sparse mapping comprises any one of following:

performing continuous mapping in a time domain, and performing the sparse mapping in a frequency domain; and performing sparse mapping in both the time domain and the frequency domain.

**19.** The apparatus according to claim 17, wherein the resource mapping rule further comprises interleaving mapping for a plurality of time-frequency domain data sets, and the plurality of time-frequency domain data sets belong to a plurality of receiving devices.

**20.** The apparatus according to claim 19, wherein the interleaving mapping comprises any one of following:

performing the interleaving mapping in only a frequency domain; and
performing the interleaving mapping in both a time domain and a frequency domain.

**21.** A data receiving and processing apparatus, comprising:

a demodulation module, configured to demodulate received data to obtain a time domain data set corresponding to a current processing time unit;
a second transforming module, configured to transform the time domain data set into a time-frequency domain data set;
an obtaining module, configured to obtain a third time-frequency domain data set corresponding to the receiving device from the time-frequency domain data set based on a preset resource mapping rule; and
a third transforming module, configured to transform the third time-frequency domain data set into a delay Doppler domain data set, wherein
the resource mapping rule comprises sparse mapping.

**22.** The apparatus according to claim 21, wherein the sparse mapping comprises any one of following:

performing continuous mapping in a time domain, and performing the sparse mapping in a frequency domain; and
performing sparse mapping in both the time domain and the frequency domain.

**23.** The apparatus according to claim 21, wherein the resource mapping rule further comprises interleaving mapping for a plurality of time-frequency domain data sets, and the plurality of time-frequency domain data sets belong to a plurality of receiving devices.

**24.** The apparatus according to claim 23, wherein the interleaving mapping comprises any one of following:

performing the interleaving mapping in only a frequency domain; and
performing the interleaving mapping in both a time domain and a frequency domain.

**25.** A communications device, comprising a memory, a processor, and a program stored in the memory and executable on the processor, wherein when the program is executed by the processor, steps of the data sending method according to any one of claims 1 to 9 are implemented, or when the program is executed by the processor, steps of the data receiving and processing method according to any one of claims 10 to 16 are implemented.

**26.** A readable storage medium, wherein the readable storage medium stores a program or an instruction, and when the program or the instruction is executed by a processor, steps of the data sending method according to any one of claims 1 to 9 are implemented, or when the program or the instruction is executed by a processor, steps of the data receiving and processing method according to any one of claims 10 to 16 are implemented.

**27.** A chip, wherein the chip comprises a processor and a communications interface, the communications interface is coupled to the processor, and the processor is configured to run a program or an instruction, to implement the data sending method according to any one of claims 1 to 9, or the data receiving and processing method according to any one of claims 10 to 16.

FIG. 1

FIG. 2

FIG. 3

FIG. 4

Transform a delay Doppler domain data set on a delay Doppler resource block into a time-frequency domain data set

501

Map the time-frequency domain data set to a time-frequency resource block based on a preset resource mapping rule

502

Send the time-frequency domain data set on the time-frequency resource block

503

FIG. 5

Inverse sympletic finite Fourier transform          Mapping

Delay Doppler mapping

Logical time-frequency mapping

Physical time-frequency mapping

FIG. 6

Inverse sympletic finite Fourier transform          Mapping

Delay Doppler
mapping

Logical time-
frequency mapping

Physical time-
frequency mapping

FIG. 7

Inverse sympletic finite Fourier transform          Mapping

Delay Doppler
mapping

Logical time-
frequency mapping

Physical time-
frequency mapping

FIG. 8

FIG. 9

Inverse sympletic finite Fourier transform     Mapping

Delay Doppler mapping

Logical time-frequency mapping

Physical time-frequency mapping

FIG. 10

| Demodulate received data to obtain a time domain data set corresponding to a current processing time unit | 1101 |

↓

| Transform the time domain data set into a time-frequency domain data set | 1102 |

↓

| Obtain a third time-frequency domain data set corresponding to the receiving device from the time-frequency domain data set based on a preset resource mapping rule | 1103 |

↓

| Transform the third time-frequency domain data set into a delay Doppler domain data set | 1104 |

FIG. 11

1200

Data sending apparatus

First transforming module — 1201

Mapping module — 1202

Sending module — 1203

FIG. 12

1300

Data receiving and processing
apparatus

Demodulation module — 1301

Second transforming module — 1302

Obtaining module — 1303

Third transforming module — 1303

FIG. 13

1400

Communications device

1401 — Processor ⬌ Memory — 1402

FIG. 14

1500                              1501

Network side device

1504 — Processor

1505 — Memory

Bus interface

Radio frequency
apparatus — 1502

Baseband
apparatus — 1503

Network interface

1506

FIG. 15

FIG. 16

## INTERNATIONAL SEARCH REPORT

| International application No. |
| --- |
| **PCT/CN2021/116461** |

| A. | CLASSIFICATION OF SUBJECT MATTER |
| --- | --- |

H04L 25/03(2006.01)i;  H04L 27/26(2006.01)i

According to International Patent Classification (IPC) or to both national classification and IPC

| B. | FIELDS SEARCHED |
| --- | --- |

Minimum documentation searched (classification system followed by classification symbols)

H04L H04W

Documentation searched other than minimum documentation to the extent that such documents are included in the fields searched

Electronic data base consulted during the international search (name of data base and, where practicable, search terms used)

CNPAT; CNKI; WPI; EPODOC, 3GPP: 稀疏, 多普勒, 延迟, 迟延, 延时, 映射, 交织, sparse, doppler, delay, mapping, ISFFT, SFFT, OTFS, interweaving

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | 李伶珺 (LI, Lingjun). "抗多普勒频移正交时频空系统性能分析与优化 (Performance Analysis and Optimizition of Doppler Resilient Orthogonal Time Frequency Space Ststems)" 《中国优秀博硕士学位论文全文数据库(硕士)信息科技辑》 2020年第3期 (Chinese Master's Theses Full-text Database, Information Science, 2020, Vol. 3), 15 March 2020 (2020-03-15), sections 2.1.2, 3.3, 4.2 | 1-27 |
| A | CN 108845316 A (CHINA SATELLITE OCEAN MEASUREMENT AND CONTROL PART) 20 November 2018 (2018-11-20) entire document | 1-27 |
| A | WO 2020069147 A1 (INTEL CORPORATION) 02 April 2020 (2020-04-02) entire document | 1-27 |
| A | CN 110463285 A (INTEL CORPORATION et al.) 15 November 2019 (2019-11-15) entire document | 1-27 |
| A | CN 111279337 A (COHERE TECHNOLOGIES) 12 June 2020 (2020-06-12) entire document | 1-27 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 October 2021** | **01 December 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/116461**

| Patent document cited in search report | | | Publication date (day/month/year) | Patent family member(s) | | | Publication date (day/month/year) |
|---|---|---|---|---|---|---|---|
| CN | 108845316 | A | 20 November 2018 | None | | | |
| WO | 2020069147 | A1 | 02 April 2020 | CN | 112771807 | A | 07 May 2021 |
| CN | 110463285 | A | 15 November 2019 | US | 2020029302 | A1 | 23 January 2020 |
| | | | | WO | 2018175760 | A1 | 27 September 2018 |
| | | | | EP | 3603223 | A1 | 05 February 2020 |
| CN | 111279337 | A | 12 June 2020 | WO | 2019051093 | A1 | 14 March 2019 |
| | | | | US | 2020403829 | A1 | 24 December 2020 |
| | | | | EP | 3679493 | A1 | 15 July 2020 |

Form PCT/ISA/210 (patent family annex) (January 2015)

**REFERENCES CITED IN THE DESCRIPTION**

**Patent documents cited in the description**

- CN 202010923636